# EUROPÄISCHE PATENTANMELDUNG

(11) **EP 1 068 992 A2**
(43) Veröffentlichungstag der Anmeldung: **17.01.2001**
(21) Anmeldenummer: 00112221.7
(22) Anmeldetag: 07.06.2000
(51) Int. Cl.: B60Q 1/48

(54) **Rückfahrhilfe**

(30) Priorität: 14.07.1999 DE 19932779
(71) Anmelder: DaimlerChrysler AG, 70567 Stuttgart (DE)
(72) Erfinder: Babst, Ulrich, 81547 München (DE); Hofmann, Michael, Dr., 81927 München (DE); Navé, Peter, Dr., 85662 Hohenbrunn (DE)

(57) **Zusammenfassung**

Die Erfindung betrifft eine Rückfahrhilfe zur Unterstützung des Fahrers eines Kraftfahrzeugs insbesondere beim Einparken, umfassend mindestens eine am Heckbereich (10) des Kraftfahrzeugs angeordnete Sendeeinrichtung (12) zum Aussenden von Meßstrahlen (14) in den hinteren Gefahrenraum, mindestens eine am Heckbereich (10) des Kraftfahrzeugs angeordnete Empfangseinrichtung (16, 16a, 16b)zur Aufnahme von an zumindest einem erfaßten Objekt (18) reflektierten Strahlen (20), eine Abstand-Meßeinrichtung zur Ermittlung des Abstands (A) zwischen dem Fahrzeug und dem erfaßten Objekt (18), und eine Anzeigeeinrichtung (22) zur optischen Darstellung des Abstands (A) zum erfaßten Objekt (18). Weiterhin umfaßt die Rückfahrhilfe eine Meßstrahl-Horizontalführung für eine periodischen Abtastung eines vorbestimmten Winkelbereichs in der Horizontalebene, eine Auswerteeinrichtung zur Bestimmung der Position des erfaßten Objekts in der Horizontalebene relativ zum Fahrzeugheck und der Breitenerstreckung des erfaßten Objekts, und eine Bildschirmeinrichtung (24) zur bildlichen Darstellung der Position und der Breitenerstreckung des erfaßten Objekts in der Horizontalebene relativ zum Fahrzeugheck (10).

## Beschreibung

Die Erfindung betrifft eine Rückfahrhilfe zur Unterstützung des Fahrers eines Kraftfahrzeugs insbesondere beim Rückwärtsfahren nach dem Oberbegriff des Patentanspruches 1.

Beim Rückwärtsfahren ist es bei vielen Fahrzeugen oftmals schwierig oder sogar unmöglich, den Raum unmittelbar hinter dem Heck einzusehen. Beispielsweise ist es aufgrund von abfallenden Kofferraumabdeckungen bei Limousinen gar nicht möglich, das Ende des Fahrzeugs zu erkennen. Ähnliche Probleme ergeben sich bei Kombilimousinen mit steil abfallendem Heck. Das Überblicken des Gefahrenraums hinter dem Fahrzeug ist insbesondere bei geschlossenen Kastenwagen oder Lastkraftwagen mit geschlossen Aufbauten nur eingeschränkt möglich, so daß insbesondere hier ein großer Totbereich verbleibt.

Beim Rückwärtsfahren z.B. in eine Parklücke ergeben sich also dadurch Probleme, daß der Fahrer nur ungenau erkennen kann, ob ein Hindernis im Weg steht, das durch unbeabsichtigte Berührung beschädigt werden oder am eigenen Fahrzeug Schäden verursachen könnte.

Zu diesem Zweck sind Hilfsmitteln bekannt, die es erlauben, Hindernisse im Gefahrenraum hinter einem rückwärts fahrenden Kraftfahrzeug zu erfassen und entsprechende Signale an den Fahrzeugführer auszugeben.

Eine Einparkhilfe beschreibt das Gebrauchsmuster DE 87 17 494 U1. An der Rückseite eines Kraftfahrzeugs ist ein Sender, der einen Infrarot- oder Laserstrahl aussendet, und ein Empfänger, der den von einem Objekt reflektierten Meßstrahl aufnimmt, angeordnet. Über eine Auswerteelektronik wird dem Fahrer mittels einer LED-Anzeigenkette der gemessene Abstand zum Objekt angezeigt.

Mit dieser Einparkhilfe ist es zwar möglich, den Abstand zwischen Sender/Empfänger und dem erfaßten Objekt zu bestimmen. Jedoch kann sich der Fahrer kein Bild vom eigentlichen Gefahrenraum und der Anordnung von darin befindlichen Objekten machen. Der Fahrer führt mangels ausreichender Information möglicherweise ein Fahrmanöver aus, das zu einem Anfahren eines nicht erfaßten Objekts führt. So sind insbesondere die hinteren Eckbereiche besonders gefährdet, wenn das Fahrzeug schräg zum erfaßten Objekt steht, aber eine bloße Abstandsmessung nur den Abstand zur Heckmitte ermittelt.

Eine weitere Parkhilfe beschreibt die DE 43 03 066 C2. Zur Erleichterung des Einparkens insbesondere von großen Fahrzeugen ist hierbei eine Abstandswarneinrichtung mit einem optischen Sensorsystem vorgesehen. Das Sensorsystem soll ein Hindernis in Form eines Gegenstandes oder eines Fahrzeugteils unter Berücksichtigung eines Mindestabstandes erfassen. Die verwendeten Strahlungssender und -empfänger sind schräg nach unten ausgerichtet, wobei die entsprechend schräg nach unten gerichteten Strahlungskeulen den Bereich des Mindestabstands markieren. Bei Eindringen eines Hindernisses in die Strahlungskeule erfolgt eine Entfernungsmessung. Es werden die am Gegenstand reflektierten Impulsstrahlungsanteile vom jeweiligen Strahlungssender erfaßt und einer entsprechenden Signalaufbereitung und Signalverarbeitung zugeführt.

Auch bei dieser Parkhilfe wird eine einfache Abstandsmessung durchgeführt. Der Fahrer wird gewarnt, wenn er zu nah an ein erfaßtes Objekt auffährt, kann sich aber wiederum kein Bild des hinteren Gefahrenraumes machen.

Die bekannten Hilfsvorrichtungen weisen gemeinsam den Nachteil auf, daß mehrere unterschiedlich positionierte und/oder verschieden hohe Hindernisse im hinteren Gefahrenraum nicht mit ausreichender Sicherheit erfaßt werden können, wenn das betreffende Objekt von den statischen Meßstrahlen nicht vollständig erfaßt wird. Mit den bekannten Parkhilfen ist es dem Fahrer nicht möglich, festzustellen, wo sich das Fahrzeugheck relativ zu den im hinteren Gefahrenbereich befindlichen Objekten befindet. Mit dieser Kenntnis wäre es dem Fahrer möglich, sich für eine bestimmte Lenkbewegung und/oder eine bestimmte Fahrtrichtung zu entscheiden, uni das ermittelte Objekt zu umfahren bzw. eine Kollision zu vermeiden.

Die Aufgabe der Erfindung besteht darin, eine Rückfahrhilfe anzugeben, die dem Fahrer insbesondere bei Rückwärtsfahrt zuverlässige Informationen über die jeweilige räumliche Anordnung von im hinteren Gefahrenraum befindlichen Objekten relativ zum Fahrzeug liefert. Darüber hinaus soll mit der erfindungsgemäßen Rückfahrhilfe die Objekterfassung und Informationsverarbeitung besonders einfach, robust, zuverlässig und kostengünstig realisierbar sein.

Diese Aufgabe wird erfindungsgemäß durch eine Rückfahrhilfe mit den Merkmalen des Patentanspruches 1 gelöst. Die Unteransprüche betreffen vorteilhafte Weiterbildungen der erfindungsgemäßen Rückfahrhilfe.

Bei der Rückfahrhilfe nach der Erfindung ist am Heckbereich des Kraftfahrzeugs mindestens eine Sendeeinrichtung zum Aussenden von Meßstrahlen in den hinteren Gefahrenraum und mindestens eine Empfangseinrichtung zur Aufnahme von an zumindest einem erfaßten Objekt reflektierten Strahlen angeordnet. Eine Abstand-Meßeinrichtung ermittelt den Abstand zwischen dem Fahrzeug und dem erfaßten Objekt, welcher mit einer Anzeigeeinrichtung optisch dargestellt wird.

Gemäß eines Grundgedankens der Erfindung weist die Rückfahrhilfe eine Meßstrahl-Horizontalführung für eine periodischen Abtastung eines vorbestimmten Winkelbereich in der Horizontalebene auf. Eine Auswerteeinrichtung bestimmt dabei die Position des erfaßten Objekts in der Horizontalebene relativ zum Fahrzeugheck und die Breitenerstreckung bzw. Breite der 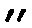 Vorderkante" des erfaßten Objekts. Auf einer Bildschirmeinrichtung wird die Position und die Breitenerstreckung des erfaßten Objekts in der Horizontalebene relativ zum Fahrzeugheck dargestellt.

Da auf eine reale bildliche Darstellung des rückwärtigen Gefahrenraums verzichtet wird, können abbildende optische Systeme stark vereinfacht und daher kostengünstig hergestellt werden. Fehler können auf einfache Weise herausgeeicht werden.

Die Rückfahrhilfe kann modifiziert auch zum Vorausschauen verwendet werden, z.B. um für Lastkraftwagen die ausreichende lichte Weite von Tunnels oder Durchfahrten anzuzeigen.

Gemäß einem weiteren Grundgedanken der Erfindung wirkt die Meßstrahl-Horizontalführung mit einer Meßstrahl-Vertikalführung zusammen. Durch die sich somit ergebende fächerförmige Ausbildung eines Lichtbandes zusammen mit dessen Horizontalbewegung ist es möglich, einen vorbestimmten Raumwinkelbereich in horizontaler und vertikaler Richtung nach Art eines Scan- bzw. Raster-Vorganges periodisch abzutasten. Die Auswerteeinrichtung umfaßt hierzu eine Höhenermittlungseinrichtung, um die Höhenerstreckung des erfaßten Objekts zu bestimmen, welche sich durch Darstellungsmittel der Bildschirmeinrichtung bildlich darstellen läßt.

Der Fahrer kann anhand einer Darstellung des Rückraumes mit relativen Positionen und Breiten der erfaßten Objekte zusammen mit einer Angabe über deren Höhe aufgrund seiner eigenen Intelligenz eine realistische Beurteilung des hinteren Gefahrenraumes vornehmen. Bei einer Rückwärtsfahrt kann er die Bewegung des eigenen Fahrzeugs bzw. seines Hecks anhand der bildlichen Darstellung verfolgen.

Um eine ausreichend genaue Aussage über die Höhe der erfaßten Objekte vornehmen zu können und den technischen Aufwand zu minimieren, kann der von der Meßstrahl-Vertikalführung abgetastete Raumwinkelbereich in eine Mehrzahl von Höhenwinkelbereichen unterteilt sein. Dabei wird jedem in einem bestimmten Höhenwinkelbereich liegenden erfaßten Objektpunkt ein Höhenbereichswert zuordnet. Um unterschiedlich hohe Objekte voneinander zu unterscheiden und eine Zuordnung zu bestimmten Objekthöhen vorzunehmen, kann das Darstellungsmittel der Bildschirmeinrichtung für jeden der Höhenbereichswerte eine unterschiedliche farbige, schraffierte und/oder dergleichen unterscheidbare Darstellungsform aufweisen.

Der Abstand der erfaßten Objekt kann durch Auswertung der geometrischen Vorgaben errechnet werden. Jedoch werden bei einer derartigen Berechnung keine Verzerrungen oder dergleichen Störungen berücksichtigt. Erfindungsgemäß ist deshalb vorgesehen, den Abstand bzw. die Position und die Breitenerstreckung des erfaßten Objekts mit Hilfe von Look-Up-Tabellen mit vorbestimmten Vorgabewerten aus den vorgegebenen optisch-geometrischen Gegebenheiten der Empfangseinrichtung zu ermitteln. In den Look-Up-Tabellen können die Störfaktoren berücksichtigt sein. Es wird keine nennenswerte Rechenleistung gebraucht, daher besteht auch kein Bedarf an Software. Bei sehr großen Stückzahlen lohnt sich die Integration der gesamten Auswerteelektronik in ein bis zwei Chips.

Um möglichst gut gegen Störlicht abgesichert zu sein, kann die Sendeeinrichtung mindestens eine schmalbandige oder monochromatische Lichtquelle aufweisen. Ebenso sollen die Empfangskameras schmalbandig ausgeführt sein und nur in dem vom Sender verwendeten Wellenlängenbereich empfindlich sein.

Die Meßstrahl-Horizontalführung und/oder die Meßstrahl-Vertikalführung kann ein Spiegelrad und/oder LCD-Blenden und/oder dergleichen Hilfsmittel für die Meßstrahl-Abtastung aufweisen. Mit diesen Maßnahmen kann man den Meßlichtstrahl auf einfache Weise über den gewünschten Raumwinkelbereich fegen lassen. Der Einsatz unterschiedlicher abbildender Sensoren, z.B. für Ultraschall oder Radar, ist denkbar.

Die Empfangseinrichtung kann mindestens eine Abbildungsoptik mit einer in deren Bildebene angeordnete Mehrzahl von lichtempfindlichen Halbleitersensoren aufweisen. Die Halbleitersensoren sind billig und für den verwendeten Wellenbereich empfindlich.

In der Bildebene der Empfangseinrichtung kann eine Anzahl von Sensorzeilen angeordnet sein, welche mindestens der Zahl der Höhenwinkelbereiche entspricht, in die der abgetastete Raumwinkelbereich aufgeteilt ist. Durch geeignete Einschränkung der Zeilenzahl läßt sich bei ausreichender Höhenauflösung eine kleinbauende Empfangseinrichtung realisieren.

Lichtsender und Kamera(s) können als fertig montierte Baueinheit hergestellt und geeicht werden.

Anhand der nachstehenden Beschreibung im Zusammenhang mit den beigefügten Zeichnungen werden weitere Vorteile, Merkmale und Einzelheiten der Erfindung deutlicher.

Es zeigen:
- Fig. 1: eine schematisierte Bildschirmdarstellung gemäß der Erfindung mit Sicht von oben auf den Gefahrenraum hinter dem eigenen, rückwärts fahrenden Fahrzeug;
- Fig. 2: eine Darstellung des Funktionsprinzips des Lichtschnittverfahrens;
- Fig. 3: eine schematisierte Draufsicht auf die Anordnung und das Funktionsprinzip der erfindungsgemäßen Rückfahrhilfe;
- Fig. 4: eine schematisierte Seitenansicht auf die Anordnung und das Funktionsprinzip der erfindungsgemäßen Rückfahrhilfe;
- Fig. 5: eine Darstellung des Funktionsprinzips des Abtastvorganges;
- Fig. 6: ein stark vereinfachtes, schematisiertes Blockschaltbild der Schaltungsanordnung für die erfindungsgemäße Rückfahrhilfe.

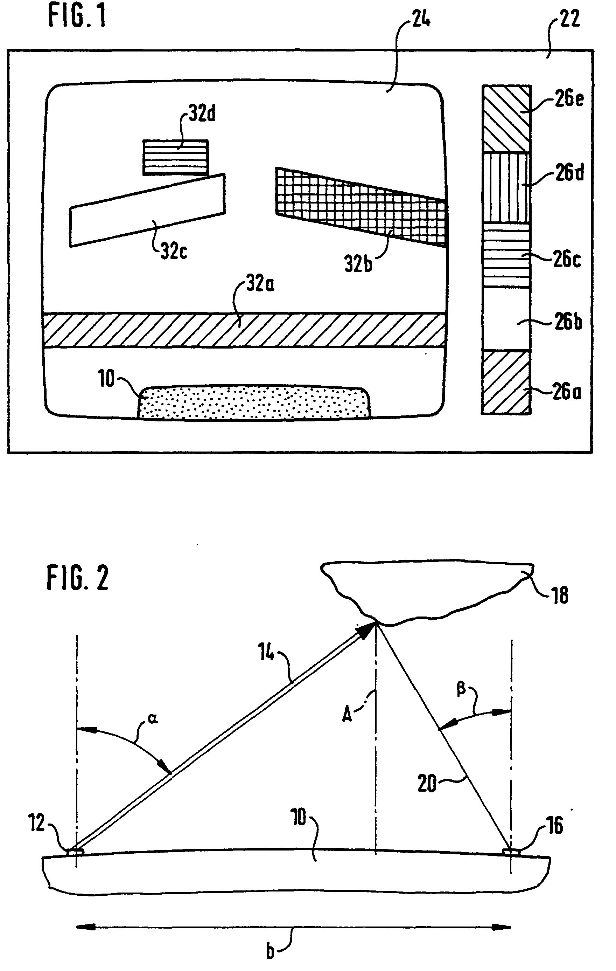

In der beschriebenen Ausführungsform wird dem Fahrer eine Vogelperspektive (Figur 1) des Gefahrenraums hinter dem rückwärts fahrenden Kraftfahrzeug auf einem Monitor 22 angezeigt. Die Darstellung auf dem Monitor 22 wie er z.B. aus der Heimcomputerwelt bekannt ist, zeigt Objekte 32a, 32b, 32c, 32d schematisch an und weist durch Farbe auf deren Ausdehnung in drei Raumdimensionen hin. Hierzu werden Objektpunkte, deren reflektiertes Licht durch Sensoren wahrgenommen werden, in einem dreidimensionalen Raumkoordinatensystem lokalisiert und am Monitor 22 dargestellt. Die Zusammenfassung der Bildpunkte am Monitor 22 zu Bildern ausgedehnter Strukturen wird der 'Intelligenz' des Fahrers überantwortet. Es wird auf eine semantische Erfassung des Objektraums verzichtet, wie dies beispielsweise bei bekannten Lichtschnittverfahren in der Robotik der Fall ist, wo die dort geforderten Leistungen nur über erheblichen Aufwand an Rechenleistung erzielt werden. Dadurch benötigt die erfindungsgemäße Rückfahrhilfe keine aufwendige Informationsverarbeitung und ist robust und kostengünstig zu realisieren.

Figur 1 zeigt schematisch die Monitoransicht des hinteren Gefahrenraums, wie sie dem Fahrer angezeigt wird, wenn er den Totbereich hinter dem Fahrzeugheck 10, etwa beim Rückwärtsfahren, einsehen möchte. Die angezeigten, erfaßten Objekte 32a, 32b, 32c, 32d sind je nach ihrer Höhe mit unterschiedlicher Farbe dargestellt. Die Höhenskala, die jedem Höhenbereich eine bestimmte Farbe 26a, 26b, 26c, 26d, 26e zuordnet, ist rechts neben der Darstellung des hinteren Gefahrenraums eingeblendet. Beispielsweise ist eine Absperrkette 32c gelb, einen Hauskante 32b blau und grün, ein Papierkorb 32d grün und ein Bordstein 32a rot dargestellt. Das Heck 10 des eigenen Kraftfahrzeuges ist fest eingeblendet. Die in ihrer Position relativ zum Fahrzeugheck und in ihrer Breitenausdehnung ermittelten Objekte 32a, 32b, 32c, 32d sind in einer standartisierten Tiefe dargestellt. Der Monitor 22 kann im Armaturenbrett oder in der Mittelkonsole integriert sein.

Die Arbeitsweise der Rückfahrhilfe beruht auf Triangulation nach dem Lichtschnittverfahren. Figur 2 zeigt schematisch das mathematische Prinzip des angewendeten Lichtschnittverfahrens. Ein am (in Figur 2 nur angedeutet) Heckbereich 10 des Fahrzeugs angeordneter Sender 12 sendet einen Lichtstrahl 14 in die zu überblickende Szene. Die Abstrahlrichtung des Lichtstrahls ist durch den Abstahlwinkel α bestimmt. In dem in Figur 2 dargestellten Beispiel ist α > 0 und β < 0. Der Abstahlwinkel α variiert mit der Zeit. Der Lichtstahl streicht oder fegt in der Horizontalebene periodisch über einen festgelegten Winkelbereich. Dieser Bereich reicht gemessen von der Fahrzeugachse von etwa -75°bis +75°. Die Zeit eines Durchgangs sollte kürzer als 200 ms sein.

Ein ebenfalls am Heckbereich 10 des Fahrzeugs angeordneter Empfänger 16 besteht im wesentlichen aus einer (nicht näher dargestellten) Kamera mit lichtempfindlichen Halbleitersensoren in ihrer Brennebene. Die Kamera ist mit einem Weitwinkelobjektiv ausgerüstet und kann billig hergestellt werden, da die Abforderungen an die Abbildungsgüte reduziert sind. Chromatische Aberration und Verzeichnungen spielen keine Rolle. Die Brennweite des Kameraobjektivs beträgt nur wenige Millimeter, beispielsweise 12 mm, so daß Fokussierung nicht benötigt wird. Da nur mit Eigenlicht gearbeitet wird, sind die Anforderungen an die Helligkeitsregelung sehr stark reduziert und werden durch die bekanntlich sehr große Dynamik von Siliziumsensoren bedient.

Aus der Lage eines Bildpunktes in der Bildebene der Kamera zusammen mit deren geometrischen Daten wird der Empfangswinkel β berechnet. Mit vorgegebenem Abstand b zwischen Sender 12 und Empfänger 16, dem Abstrahlwinkel α und dem Empfangswinkel β lassen sich nach den Regeln der ebenen Trigonometrie die ebenen Koordinaten x und y bzw. die Position des erfaßten Objektpunktes in der Horizontalebene berechnen.

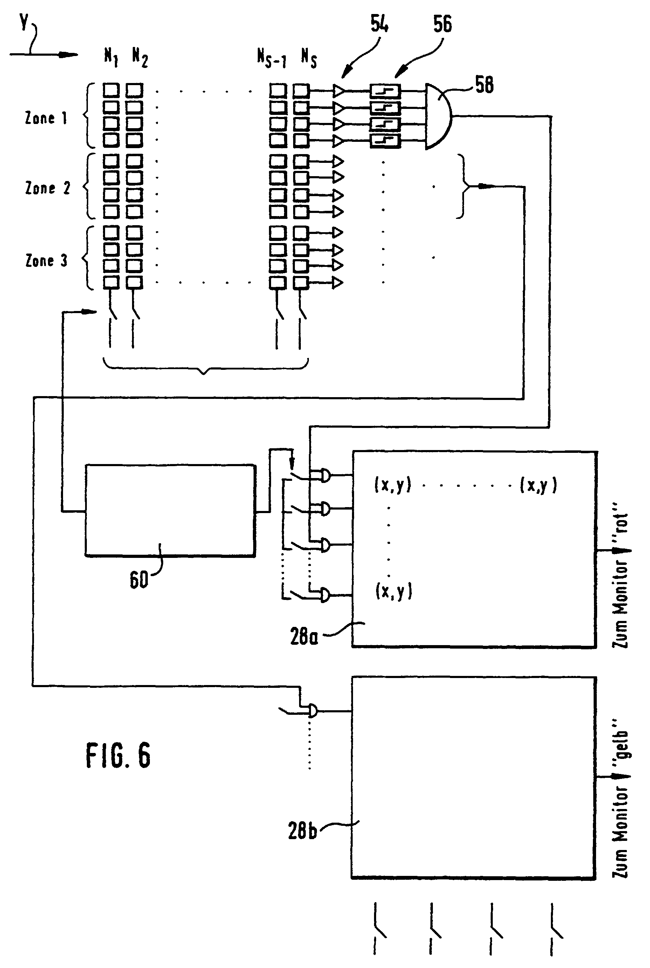

In der Praxis wird diese Rechnung nicht durchgeführt, sondern es werden Look-Up-Tabellen (28a, 28b in Figur 6) verwendet, in die auch systembedingte geometrische Verzerrungen eingearbeitet werden können.

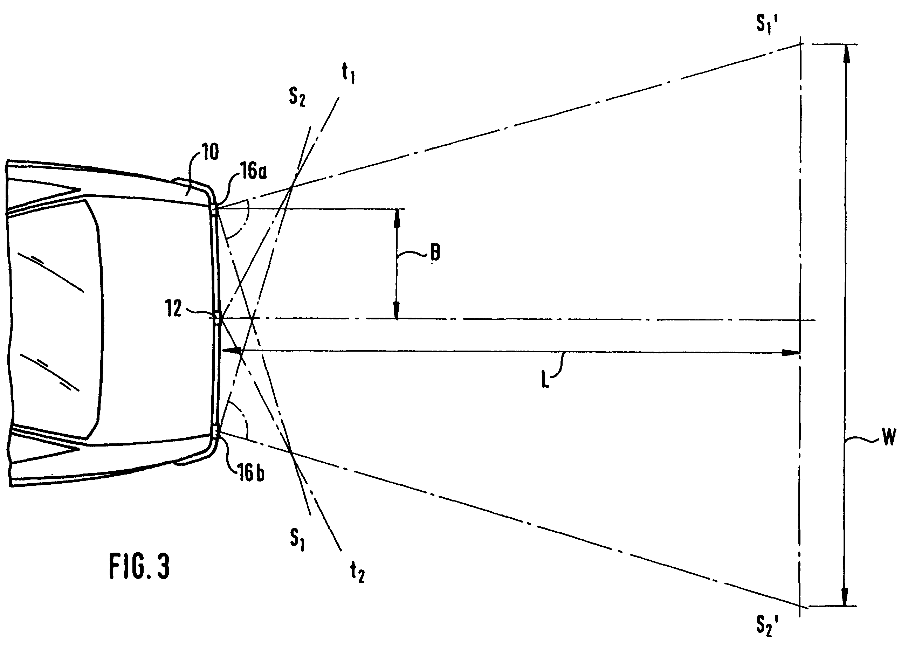

Figur 3 zeigt die Geometrie eines Ausführungsbeispiels. An dem nur angedeutet dargestellten Fahrzeugheck 10 ist etwa an dessen Mitte der Sender 12 angeordnet. Beidseitig des Senders 12 sind in einem Basisabstand B = 1 m zum Sender 12 die Empfänger 16a und 16b so positioniert, daß ein ausreichend breiter Gefahrenraum überstrichen wird. Die Größe des zu überwachenden Gefahrenraums ist nach DIN 75031 mit 3 m mal 3 in gewählt. Der Sendewinkelbereich t₁ - Sender 12 - t₂ beträgt 125°. Der Empfangswinkelbereich S₁' - Empfänger 16a - S₁ (S₂' - Empfänger 16b - S₂) der beiden Empfangskameras 16a, 16b beträgt 90 Grad, was in etwa einem gängigen Superweitwinkelobjektiv einer Kleinbildkamera mit 21 mm Brennweite entspricht.

Bei dem in der Figur 3 dargestellten Ausführungsform liegt der dem Fahrzeug nächstgelegene detektierbare Raumpunkt ca. 25 cm vom Heck 10 entfernt.

Für den denkbaren Fall, in dein es ausreicht, daß der nächstgelegene detektierbare Raumpunkt ca. 50 cm vom Fahrzeugheck entfernt liegt, würde eine Monokameraanordnung mit nur einer Empfangskamera genügen. Diese (in vereinfachter Form in Figur 2 gezeigte) Anordnung hätte einen Vorteil beim Justieren. Der eine Sender 12 und die eine Empfangskamera 16 könnten auf einer starren Schiene von weniger als b = 1 m Länge montiert werden. Die Montage könnte im Herstellerwerk erfolgen und dort justiert werden. Der Einbau und der Ersatz, z.B. bei Karosserieschäden, könnte durch Austausch der ganzen Baueinheit erfolgen.

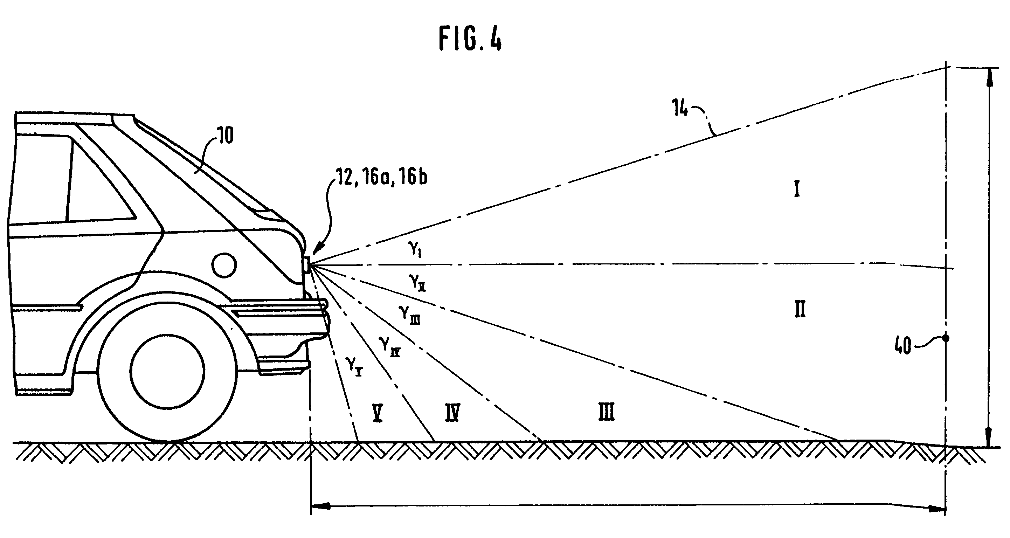

In vertikaler Richtung genügt zur Information des Fahrers eine grobe Aufteilung des Objektraums in z.B. nur fünf Bereiche I, II, III, IV, V, wie Figur 4 zeigt, wobei eine feinere aber auch eine gröbere Aufteilung denkbar ist. Ein erfaßter Objektpunkt 40 wird also einem von fünf Höhenwinkelbereichen (II in Figur 4) zugeordnet. Die einzelnen Höhenwinkelbereiche I, II, III, IV, V müssen nicht notwendigerweise gleiche Öffnungswinkel γ_{I}, γ_{II}, γ_{III}, γ_{IV}, γ_{V} haben. Der Bereich oberhalb des von dem Meßstrahl erreichten Raumes kann vom Fahrer leicht eingesehen werden. Auf dem Monitor 22 wird jeder Höhenwinkelbereich I, II, III, IV, V in einer eigenen Farbe 26a, 26b, 26c, 26d, 26e dargestellt. Bei einem Monochrom-Monitor können die unterschiedlichen Höhenwinkelbereiche jedoch auch durch unterschiedliche Schraffierung oder dergleichen Unterscheidungsmerkmale dargestellt werden. Der Fahrer kann mit geeigneten (nicht gezeigten) Schaltern am Monitor 22 die Form der Darstellung beeinflussen; z.B. kann er bestimmte Höhenwinkelbereiche ausblenden oder fusioniert darstellen.

Figur 4 zeigt den überwachten Raum in der Seitenansicht. Am Fahrzeugheck ist ein auch in vertikale Richtung strahlender Sender 12 positioniert. Der überwachte Raum ist vertikal in fünf Zonen aufgeteilt. Der ganze Raum wird durch nur einen Sender 12 ausgestrahlt, aber durch zwei Kameras 16a, 16b beobachtet, um mit gängigen Objektiven den ganzen interessierenden Raum einsehen zu können.

Der Sender 12 hat eine möglichst schmalbandige bzw. monochromatische Lichtquelle, z.B. einen Infrarot-Festkörperlaser.

Schmalbandigkeit ist sowohl für den Sender 12 als auch für den Empfänger 16 erwünscht, um möglichst gut gegen Störlicht abgesichert zu sein. Es wird vorzugsweise Infrarotstrahlung zwischen 700 und 950 nm Wellenlänge eingesetzt, da diese sowohl unsichtbar und somit nicht störend als auch augensicher ist.

In der Brennebene der beiden Empfangskameras 16a und 16b der Stereokameraanodnung oder der einen Empfangskamera 16 (Figur 1) der Monokameraanodnung sind Siliziumdetektoren 30 (Figur 6) plaziert, die billig sind und deren spektrale Empfindlichkeit bis in den Wellenlängenbereich von 700 bis 950 nm reicht. Auf Einzelheiten des Senders 12 wird hier nicht näher eingegangen, weil scannende Laserlichtquellen prinzipiell bekannt sind und z.B. an den Verkaufskassen in modernen Warenhäusern Anwendung finden. Die Lichtstrahlbewegung wird hierbei durch ein Spiegelrad oder durch andere Hilfsmittel, z.B. LCD-Blenden realisiert.

Die notwendige Anzahl von Sensorpunkten in der Bildebene der beiden Kameras 16a, 16b der Stereokameraanordnung bzw. der einen Kamera 16 der Monokameraanordnung wird aus der gewünschten Auflösung abgeleitet. Wird eine Auflösung am L = 3 m (in Figur 3) entfernten Objekt von 2 Linienpaaren pro cm und ein Blickfeld von W = 3 m Breite benötigt, so sind 300 * 2 * 2 = 1.200 Sensoren pro Zelle notwendig. Dabei muß empirisch festgestellt werden, ob nicht etwa die halbe Auflösung ausreichend wäre. Siliziumsensoren mit einer Breite von 10 µm sind allgemein verfügbar. Aus der Proportion 3 m : 2,5 mm = Brennweite : 10 µm berechnet sich die Brennweite zu 12 mm. Die Kamera ist also sehr kleinbauend.

Bei einer vertikalen Aufteilung in fünf Zonen sind in der Bildebene nur ca. 5 Zeilen notwendig, weil innerhalb einer vertikalen Zone keine Objektauflösung stattfindet, wie Figur 4 zeigt. In einer Durchführbarkeitsstudie kann geklärt werden, mit welcher Zonenzahl der günstigste Kompromiß zwischen Ortsauflösung, Tiefenauflösung und technischem Aufwand erzielt werden kann.

Wenn für jede Zone nur eine Sensorzeile vorgesehen ist, sind die verwendeten Sensoren außerordentlich lang im Vergleich zu ihrer Breite. Bei 5 Zonen ergibt sich für die Sensoren eine Länge von nahezu 2 mm. Das Verhältnis von Sensorlänge zu Sensorbreite von 200 zu 1 könnte aus signaltechnischen Gründen (Dunkelstrom usw.) sehr ungünstig sein, so daß eine Erhöhung der Zeilenanzahl pro Zone hier Verbesserungen erwarten läßt. Der Einfachheit halber wird für eine weitere Rechnung deshalb angenommen, daß jede vertikale Objektraumzone durch N_{z} >> 1 Sensoren erfaßt wird, wobei N_{z} die Anzahl der Sensorzeilen ist.

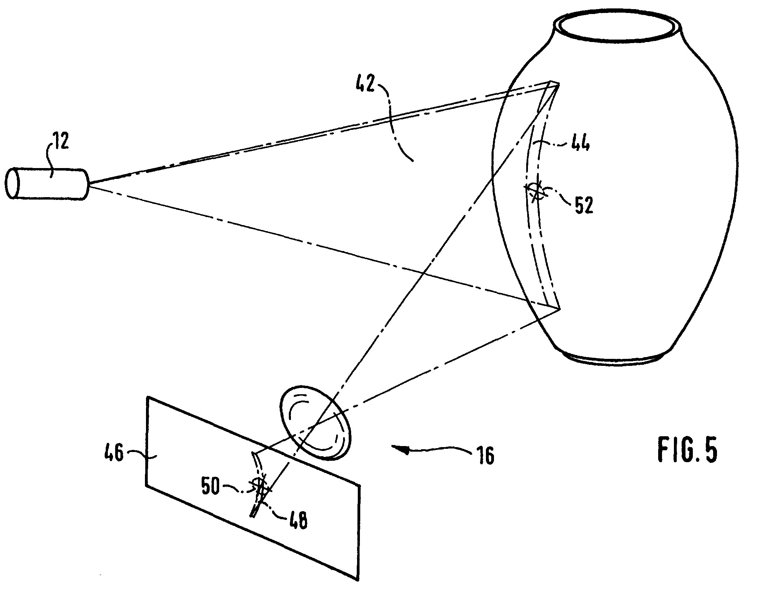

Die Skizze in Figur 5 zeigt das Zusammenspiel von einem Sender 12 und einem Empfänger 16. Der Sender 12 erzeugt ein schmales, hohes Lichtband 42, das in horizontaler Bewegung über den Objektraum fegt. Die Kamera 16 bildet den Schnitt 44, den das Lichtband 42 mit der dargestellten Objektoberfläche erzeugt, in ihrer Bildebene 46 als Kurve 48 ab. Der zu jedem Zeitpunkt bzw. zu jedem Winkel α des Senders auf der Bildebene in Figur 5 am weitesten rechts liegende Bildpunkt 50 gehört zu dem Objektpunkt 52, der dem Sender am nächsten liegt. Um in jeder Vertikalzone den bei jedem Winkel α des Senders nächstgelegenen Objektpunkt zu bestimmen, muß die Bildebene 48 nach dem von rechts kommend ersten Bildpunkt 50 abgesucht werden. Das bedeutet, daß der Scanvorgang durch die Sensorebene wesentlich schneller erfolgt als die Scanbewegung der Lichtquelle. Da diese mit etwa 5 Hz ausreichend schnell abläuft, sollte die Bildebene mit nicht weniger als vielleicht 5 kHz abgetastet werden.

Figur 6 zeigt eine nur angedeutete Darstellung einer einfachen technischen Möglichkeit für eine Schaltungsanordnung, mit welcher sich der Abtastvorgang auf unkomplizierte Weise realisieren läßt. Im oberen Teil der Figur 6 ist skizziert, wie jeweils N_{z} Sensorzeilen 30 nach Verstärkung 54 und Schwellwertdiskriminierung 56 durch ein ODER-Gatter 58 zusammengefaßt werden. Von der Objektivseite der Bildebene aus gesehen von links kommend (Pfeil Y) werden alle Spalten N₁ - N_{S} der Reihe nach abgefragt.

Sobald ein Bildpunkt entdeckt ist, wird die zur Zone (Zone 1 - Zone 3) gehörige Look-Up-Tabelle 28a, 28b ausgesucht. Dort wird durch den Lichtsender eine bestimmte Spalte aktiviert, und die Zeile wird durch eine Spaltenfortschaltung 60 der Sensorebene aktiviert. Somit wird jede Spalte der Look-Up-Tabelle 28a oder 28b der Reihe nach während eines Lichtsender-Scans einmal durchlaufen. Mit anderen Worten, jedes Element (x,y) der Look-Up-Tabelle wird einmal während eines Lichtsender-Scans aktiviert. Der Wert des Elements (x,y) der Look-Up-Tabelle, das in dem Augenblick aktiviert wird, wenn ein Lichtpunkt entdeckt ist, wird an den (nicht gezeigten) Monitor gesendet. Dieser Wert (x,y) beinhaltet die Bildschirmkoordinaten eines Bildpunktes, der die seiner Zone zugeordnete Farbe oder sonstige Vertikalkennung trägt. Nachdem ein Lichtpunkt entdeckt worden ist, blockiert eine (nicht gezeigte) Torschaltung den Rest eines Sensorebenen-Scans, um sicherzustellen, daß immer der nächstgelegene Objektpunkt erfaßt wird.

Die Look-Up-Tabellen 28a, 28b werden aus PROMs (programmierbare Lesespeicher) gebildet. Sie werden nach Eichung der auf einer Schiene fest mit einander verbundenen Sender und Empfänger "gebrannt", werden also nicht mehr verändert. Sie enthalten das für jede Sensorebenespalte (entsprechend der Look-Up-Tabellen-Zeile) und jede Senderichtung (entsprechend der Look-Up-Tabellen-Spalte) gültige Bildschirmkoordinatenpaar. Diese Koordinaten errechnen sich, wie eingangs dargelegt, nach den Regeln der Ebenen Trigonometrie, korrigiert um Verzerrungen, die teils aus der Weitwinkeloptik der Kamera(s) kommen, teils andere, empirisch zu ermittelnde, Ursachen haben.

Zusammenfassend wird durch die Erfindung eine Rückfahrhilfe anzugeben, die dem Fahrer insbesondere bei Rückwärtsfahrt zuverlässige Informationen über die jeweilige räumliche Anordnung von im hinteren Gefahrenraum befindlichen Objekten relativ zum Fahrzeug liefert. Darüber hinaus macht die erfindungsgemäße Rückfahrhilfe die Objekterfassung und Informationsverarbeitung besonders einfach, robust, zuverlässig und kostengünstig.

## Patentansprüche

1. Rückfahrhilfe zur Unterstützung des Fahrers eines Kraftfahrzeugs insbesondere beim Einparken, umfassend
mindestens eine am Heckbereich (10) des Kraftfahrzeugs angeordnete Sendeeinrichtung (12) zum Aussenden von Meßstrahlen (14) in den hinteren Gefahrenraum,
mindestens eine am Heckbereich (10) des Kraftfahrzeugs angeordnete Empfangseinrichtung (16, 16a, 16b) zur Aufnahme von an zumindest einem erfaßten Objekt (18) reflektierten Strahlen (20),
eine Abstand-Meßeinrichtung zur Ermittlung des Abstands (A) zwischen dem Fahrzeug und dem erfaßten Objekt (18), und
eine Anzeigeeinrichtung (22) zur optischen Darstellung des Abstands (A) zum erfaßten Objekt (18),
**gekennzeichnet durch**
eine Meßstrahl-Horizontalführung für eine periodischen Abtastung eines vorbestimmten Winkelbereichs in der Horizontalebene,
eine Auswerteeinrichtung zur Bestimmung der Position des erfaßten Objekts in der Horizontalebene relativ zum Fahrzeugheck und der Breitenerstreckung des erfaßten Objekts, und
eine Bildschirmeinrichtung (24) zur bildlichen Darstellung der Position und der Breitenerstreckung des erfaßten Objekts in der Horizontalebene relativ zum Fahrzeugheck (10).

2. Rückfahrhilfe nach Anspruch 1,
**dadurch gekennzeichnet**, daß
die Meßstrahl-Horizontalführung mit einer Meßstrahl-Vertikalführung zusammenwirkt, um einen vorbestimmten Raumwinkelbereich in horizontaler und vertikaler Richtung nach Art eines Scan- bzw. Raster-Vorganges periodisch abzutasten, die Auswerteeinrichtung eine Höhenermittlungseinrichtung umfaßt, um die Höhenerstreckung des erfaßten Objekts zu bestimmen, und
die Bildschirmeinrichtung (24) Darstellmittel zur bildlichen Darstellung der Höhenerstreckung des erfaßten Objekts aufweist.

3. Rückfahrhilfe nach Anspruch 2,
**dadurch gekennzeichnet**, daß
der von der Meßstrahl-Vertikalführung abgetastete Raumwinkelbereich in eine Mehrzahl von Höhenwinkelbereichen unterteilt ist, jedem in einem bestimmten Höhenwinkelbereich liegenden erfaßten Objektpunkt ein Höhenbereichswert zuordnet ist, und die Darstellungsmittel der Bildschirmeinrichtung (24) für jeden der Höhenbereichswerte eine unterschiedliche farbige, schraffierte und/oder dergleichen unterscheidbare Darstellungsform (26a, 26b, 26c, 26d, 26e) aufweist.

4. Rückfahrhilfe nach einem der Ansprüche 1 bis 3,
**gekennzeichnet durch**
eine Look-Up-Tabellen-Einrichtung (28a, 28b) mit vorbestimmten Vorgabewerten zur Ermittlung des Abstands bzw. der Position und der Breitenerstreckung des erfaßten Objekts aus den vorgegebenen optisch-geometrischen Gegebenheiten der Empfangseinrichtung.

5. Rückfahrhilfe nach einem der Ansprüche 1 bis 4,
**dadurch gekennzeichnet**, daß
die Sendeeinrichtung (12) mindestens eine schmalbandige oder monochromatische Lichtquelle und die Meßstrahl-Horizontalführung und/oder die Meßstrahl-Vertikalführung ein Spiegelrad und/oder LCD-Blenden und/oder dergleichen Hilfsmittel für die Meßstrahl-Abtastung aufweisen.

6. Rückfahrhilfe nach einem der Ansprüche 1 bis 5,
**dadurch gekennzeichnet**, daß
die Empfangseinrichtung (16, 16a, 16b) mindestens eine Abbildungsoptik mit einer in deren Bildebene angeordnete Mehrzahl von lichtempfindlichen Halbleitersensoren (30) aufweist.

7. Rückfahrhilfe nach einem der Ansprüche 3 bis 5,
**dadurch gekennzeichnet**, daß
in der Bildebene der Empfangseinrichtung (16, 16a, 16b) eine Anzahl von Sensorzeilen angeordnet ist, welche mindestens der Zahl der Höhenwinkelbereiche entspricht, in die der abgetastete Raumwinkelbereich aufgeteilt ist.
